# EUROPEAN PATENT APPLICATION

(11) **EP 2 525 464 A1**
(43) Date of publication of application: **21.11.2012**
(21) Application number: 10841856.7
(22) Date of filing: 25.10.2010
(51) Int. Cl.: H02J 3/38

(54) **CONTROL METHOD FOR LOW VOLTAGE RIDE THROUGH**

(30) Priority: 11.01.2010 CN 201010033770
(71) Applicant: Sinovel Wind Group Co., Ltd, Haidian District, Beijing 100872 (CN)
(72) Inventor: SU, Liying, Beijing 100872 (CN); JING, Haibin, Beijing 100872 (CN); YANG, Song, Beijing 100872 (CN); YUAN, Ying, Beijing 100872 (CN)
(74) Representative: Michalski, Stefan
(86) International application number: PCT/CN2010/001689
(87) International publication number: WO 2011/082512

(57) **Abstract**

A control method for low voltage ride through comprises the following steps: 1)A control circuit (9) monitors a DC bus voltage of a set of frequency converters (3, 4) connected between a wind generator rotor and a power grid (12) and a voltage of the power grid; 2) If the monitored DC bus voltage of the set of frequency converters is judged to be higher than a designed value, the control circuit controls a thyristor (7) in a crowbar protection circuit connected to the wind generator rotor to be closed to obtain a shunt protection; 3) After the thyristor is closed, the control circuit controls a stator breaker (1) which is connected between a wind generator stator and the power grid to disconnect the wind generator stator and the power grid; 4) After the stator breaker disconnects the power grid and the wind generator stator, the control circuit further controls a breaker (5) of a shunt circuit to be opened firstly and then be closed, the thyristor is turned off automatically, and thus the protection function of the shunt circuit is recovered; 5) This state is maintained until the control circuit monitors a recovery of the voltage of the power grid, a generator synchronous control breaker is closed rapidly, and a normal operation is recovered. The control method provides low voltage ride through performance with a simple control strategy.

## Description

### Technical field of the invention

This invention relates to wind power generating technology, in particular to a control method for low voltage ride through.

### Background

As the development of wind generating technology in the world nowadays, the capacity of power generator increases quickly, and the ratio of wind generating in the power grid increases correspondingly, therefore, the performance of grid-connection and the operating condition of the wind turbine generator system are important to the stability of the power grid. During operating, the power grid faults will result in voltage dropping, which causes a serial of transition conditions, such as over-voltage, over-current or increasing of rotational speed and so on. Therefore, in order to assure the safe operation of a wind turbine generator, a control device of the wind turbine generator will disconnect the wind turbine generator, i.e. turn off the connection between the wind turbine generator with the power grid, when the control device monitors the dropping of the power grid.

However, in the case that the ratio of wind generating in the power grid is large, a number of wind turbine separation caused by the power grid voltage dropping faults will result in a big change of the tide in the power system and even a frequency stability problem due to the power faults in large area. Therefore, a method for low voltage ride through (LVRT) for wind generating plant is developed, in which the wind generating plant can be grid-connected within a set vale and a set time for voltage dropping when the power grid is dropping, so as to help the recovery of the power grid voltage until the power grid works normally. It is particularly important for the operating performance of doubly-fed induction generator (DFIG) as well as its features of grid-connection or disconnection with the power grid. The doubly-fed induction generator system of the prior art generally employs a thyristor (SCR) crowbar, which is trigged to protect converters when the voltage of the power grid drops below a limit, but the thyristor crowbar exhibits no function of low voltage ride through. The doubly-fed induction generator with the function of low voltage ride through generally employs active crowbar technology at rotor side of low voltage bypass system, wherein a IGBT-type crowbar circuit, a hybrid bridge type crowbar circuit, a crowbar circuit with bypass resistance are frequently used. However, these control technologies require the addition of new protection devices, which will result in increased cost. In addition, although the excitation convertors and the rotor coil are protected when the power grid has faults, the generator set operating in an induction motor way will absorb lots of reactive power, which will result in further deterioration of the stability in the voltage of the power grid.

### Summary of the invention

The main object of the invention is to provide a control method for low voltage ride through for doubly-fed induction generator, which can assure effectively the stability of voltage in the power grid.

The control method for low voltage ride through according to the present invention comprises the following steps:
1)A control circuit monitors the DC bus voltage of converters connected between a wind turbine generator rotor and the power grid and the voltage of the power grid;
2) If the monitored DC bus voltage of the converters is judged to be higher than a designed value, the control circuit controls a thyristor in a crowbar protection circuit connected to the wind turbine generator rotor to be closed to obtain a shunt protection;
3) After the thyristor is closed, the control circuit controls a stator breaker which is connected between a wind turbine generator stator and the power grid to disconnect the wind turbine generator stator and the power grid;
4) After the stator breaker disconnects the power grid and the wind turbine generator stator, the control circuit further controls a breaker of a shunt circuit in a crowbar protection circuit to be opened firstly and then be closed, the thyristor is turned off automatically, and thus the protection function of the shunt circuit is recovered;
5) This state is maintained until the control circuit monitors a recovery of the voltage of the power grid, a generator synchronous control breaker is closed rapidly, and the normal operation is recovered.

The converters comprises a grid-side converter and a generator-side converter which are serially connected between the wind turbine generator rotor and the power grid, the DC bus voltage monitored in step 1) is the DC bus voltage of the grid-side converter, and a converter grid-side breaker, which is in a normally closed state under normal working condition, are serially connected between the grid-side converter and the power grid.

In step 1), a voltage monitoring unit in the control circuit is used to monitor the DC bus voltage.

In step 2), the shunt circuit in the crowbar protection circuit used for obtaining the shunt protection, the shunt circuit comprising a rectifying bridge and a releasing resistance connected in series with the anode and the cathode of the thyristor respectively, and a breaker for connecting the rectifying bridge and the releasing resistance to a connecting point between the wind turbine generator and the converters.

In step 3), a stator control unit in the control circuit is used for controlling the disconnection of the stator breaker.

In step 4), a crowbar switch control unit in the control circuit is used for further controlling the action of the breaker to be opened firstly and then be closed.

The control method for low voltage ride through according to the present invention effectively increases the time for grid-connecting and the capacity for generating power, effectively reduces the damage of the converters, decreases the active or reactive power jitter at the moment of recovery of the power grid, avoids to absorb reactive power from the power grid, provides strong support to the power grid, and then improves the stability of the power grid.

### Brief description of the drawings

Figure 1 is a circuit diagram of the control method for low voltage ride through according to the present invention;
Figure 2 is a circuit diagram of the control method for low voltage ride through according to the present invention, showing a block diagram of a control circuit.

### Detailed description of the embodiments

A detailed description of preferred embodiments according to the present invention will now be made with reference to the companying drawings.

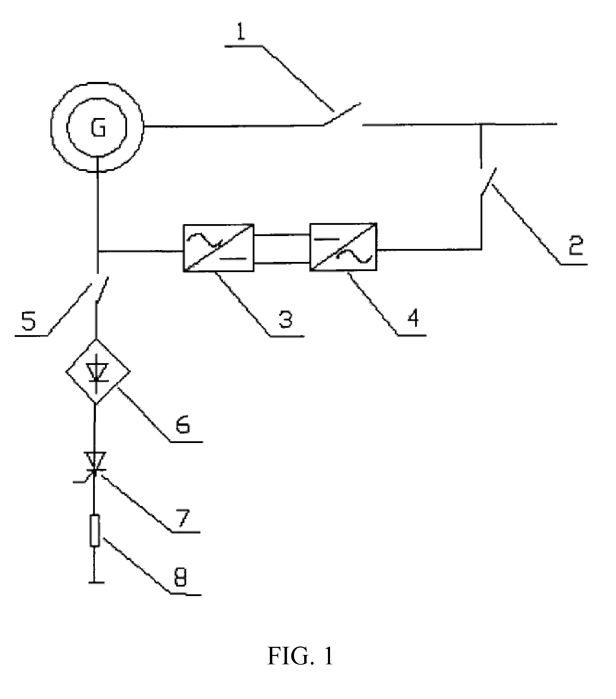

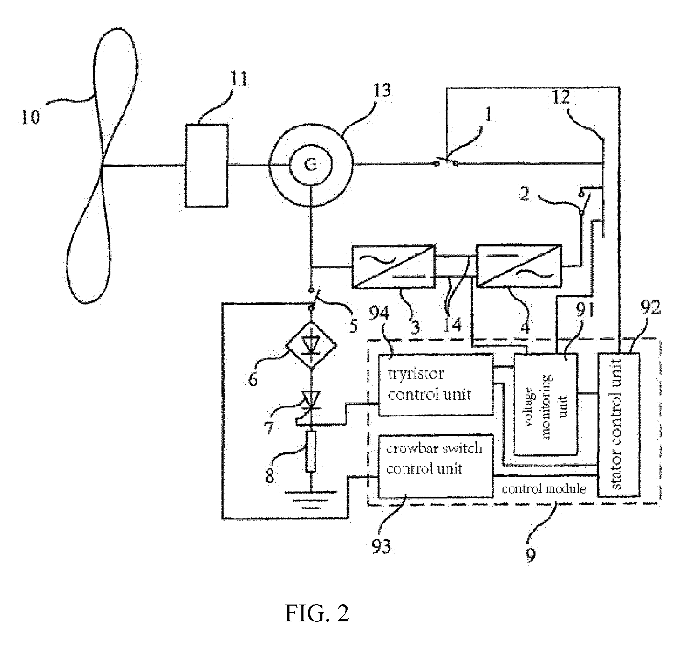

As shown in figure 1, for a 1.5 MW doubly-fed variable-speed constant-frequency induction wind turbine generator system, the control method for low voltage ride through thereof is achieved by such a system that comprises a stator breaker 1, a converter grid-side breaker 2, a generator-side converter 3 and a grid-side converter 4( 3 and 4 constitute converters), a crowbar protection circuit, and a control circuit. The generator-side converter 3 is connected in series with the grid-side converter 4, which are connected to the power grid 12 via the converter grid-side breaker 2. Meanwhile the generator-side converter 3 is connected to the rotor of a wind turbine generator G, as shown in figure 2. The converter grid-side breaker 2 can be used for controlling the entire converters to be disconnected from the power grid if necessary. The stator breaker 1 is connected between the power grid 12 and the wind turbine generator G. The stator breaker 1 and the converter grid-side breaker 2 are in a normally closed state during normal working process, and are respectively serially connected between the stator and the rotor of the wind turbine generator G and the power grid 12.

The crowbar protection circuit is composed of a thyristor 7 and a shunt circuit, wherein the shunt circuit comprises a rectifying bridge 6, a breaker 5 and a releasing resistance 8. The thyristor 7 is also referred to controllable silicon and has an anode, a cathode and a gate electrode. The anode and the cathode of the thyristor 7 are connected in series with the rectifying bridge 6 and the releasing resistance 8 respectively. The gate electrode is connected to a control circuit (also referred to control module) 9. The breaker 5 is connected to a connecting point between the wind turbine generator G and the converters, and is in a normally closed state during normal working process. The shunt circuit has a function of bypass shunting and thus has a function of bypass shunting the converters.

As shown in figure 2, the control circuit 9 comprises a voltage monitoring unit 91, a stator control unit 92, a crowbar switch control unit 93 (also referred to rotor control unit) and a thyristor control unit 94. The voltage monitoring unit 91 is connected with the power grid and the DC bus of the converter, and used to monitor the voltage of the power grid and the voltage of the DC bus of the converter. The DC bus of the converter can vary quickly when the power grid is out of normal working. The thyristor control unit 94 and the voltage monitoring unit 91 are respectively connected to the gate electrode of the thyristor 7. When the DC bus voltage of the converters (i.e. the grid-side converter 4) is monitored beyond a limit (a design value) by the voltage monitoring unit 91, the thyristor 7 is controlled to be closed by the thyristor control unit 94, and thus the shunt circuit can provide a shunt protection to the converters of the wind turbine. The stator control unit 92 is respectively connected to the thyristor control unit 94, the voltage monitoring unit 91 and the stator breaker 1. After the thyristor 7 is controlled to be closed by the thyristor control unit 94, the stator breaker 1 is controlled to be turned off by the stator control unit 92. Because the crowbar switch control unit 93 is respectively connected to the stator control unit 92 and the breaker 5, after the stator breaker 1 is turned off, the breaker 5 is further controlled to be opened firstly and then be closed afterwards by the crowbar switch control unit 93.

The working procedure of the control system for low voltage ride through according to the present invention is as follows:
When the DC bus voltage of the converter is monitored beyond a protection limit by the voltage monitoring unit 91, the thyristor 7 is controlled to be closed by the thyristor control unit 94; in particular it is trigged by applying the gate electrode of the thyristor 7 with positive voltage. As the breaker 5 is closed, the thyristor 7 is applied with positive voltage. The thyristor 7 will be closed when the thyristor 7 is applied with positive voltage.

The closing of the thyristor 7 causes that the shunt circuit is connected into the circuit of the rotor of the wind turbine generator G to bypass shunt the converters, so as to avoid damage to the converters from over-current and over-voltage, and to avoid disconnection of the wind turbine generator with the power grid when the voltage of the power grid drops, and thus to obtain the function of low voltage ride through (LVRT).

After the thyristor 7 is controlled to be closed by the thyristor control unit 94, the stator control unit 92 controls the stator breaker 1 to be opened, which disconnect the wind turbine generator G's stator and the power grid, so as to avoid to absorb reactive power from the power grid.

After the stator breaker 1 is opened, the crowbar switch control unit 93 controls the breaker 5 to be opened first and then be closed afterwards. The closing of the breaker 5 causes the thyristor 7 to be turned off automatically due to the disappearance of positive voltage of the thyristor 7, and thus the protection function of the shunt circuit is recovered after the closing of the breaker 5. This state, in which the stator breaker 1 is turned off and the breaker 5 is closed, is maintained until the voltage of the power grid is recovered. After the voltage monitoring unit 91 monitors a recovery of the voltage of the power grid, the wind turbine generator and the stator control unit 92 are controlled by the converters, to control the stator breaker 1 to close, and thus a normal working status is recovered.

Then, the control system for low voltage ride through is recovered again to a normal working status, and the above working procedure is repeated when the dropping of the voltage of the power grid is monitored.

In summary, the control method for low voltage ride through according to the present invention has some advantages as follows:
1. When the dropping of the voltage of the power grid causes the DC bus voltage of converters beyond a set threshold value, the thyristor can be trigged to be closed and the shunt circuit can be used for protecting the converters, so as to avoid damage to the converters from over-current and over-voltage;
2. The stator breaker can turned off the connection between the stator and the power grid while provide low voltage protection, so as to prevent to absorb reactive power from the power grid. The stator is disconnected from the power grid when the power grid has faults, which decreases the active or reactive power jitter at the moment of recovery of the power grid. The connection between the stator and the power grid is closed after recovery of the power grid, which can avoid instantaneous impact of the recovery;
3. The converters is always grid-connected during the process of low voltage ride through, i.e. it is not disconnected from the power grid, so that it is possible to provide reactive power for the power grid by the rotor, in order to support the recovery of the power grid;
4. The control method for low voltage ride through according to the present invention obtains the LVRT control to the doubly-fed induction generator by a simple and optimal circuit structure and control method, so as to increase the time for grid-connecting and the capacity for generating power, to reduce the damage of the converters, to obtain good LVRT performance, and to provide strong support to the power grid, so as to improve the stability of the power grid.
5. The control method for low voltage ride through according to the present invention is adapted particularly for a variable-speed constant-frequency doubly-fed wind turbine generator system of megawatt level (MW) in which the frequency is constant and the speed varies, for example but not limited to, a 1.5MW, or 3MW wind turbine generator system. Furthermore, the present invention is widely adapted to various doubly-fed induction wind generating plants.

## Claims

1. A control method for low voltage ride through, comprising the following steps:
1)A control circuit monitors the DC bus voltage of converters connected between a wind turbine generator rotor and the power grid and the voltage of the power grid;
2) If the monitored DC bus voltage of the converters is judged to be higher than a designed value, the control circuit controls a thyristor in a crowbar protection circuit connected to the wind turbine generator rotor to be closed to obtain a shunt protection;
3) After the thyristor is closed, the control circuit controls a stator breaker which is connected between a wind turbine generator stator and the power grid to disconnect the wind turbine generator stator and the power grid;
4) After the stator breaker disconnects the power grid and the wind turbine generator stator, the control circuit further controls a breaker of a shunt circuit in a crowbar protection circuit to be opened firstly and then be closed, the thyristor is turned off automatically, and thus the protection function of the shunt circuit is recovered;
5) This state is maintained until the control circuit monitors a recovery of the voltage of the power grid, a generator synchronous control breaker is closed rapidly, and the normal operation is recovered.

2. The control method for low voltage ride through according to claim 1, **characterized in that**, the converters comprises a grid-side converter and a generator-side converter which are serially connected between the wind turbine generator rotor and the power grid, the DC bus voltage monitored in step 1) is the DC bus voltage of the grid-side converter, and a converter grid-side breaker, which is in a normally closed state under normal working condition, are serially connected between the grid-side converter and the power grid.

3. The control method for low voltage ride through according to claim 1, **characterized in that**, in step 1), a voltage monitoring unit in the control circuit is used to monitor the DC bus voltage.

4. The control method for low voltage ride through according to claim 1, **characterized in that**, in step 2), the shunt circuit in the crowbar protection circuit used for obtaining the shunt protection, the shunt circuit comprising a rectifying bridge and a releasing resistance connected in series with the anode and the cathode of the thyristor respectively, and a breaker for connecting the rectifying bridge and the releasing resistance to a connecting point between the wind turbine generator rotor and the converters.

5. The control method for low voltage ride through according to claim 1, **characterized in that**, in step 3), a stator control unit in the control circuit is used for controlling the disconnection of the stator breaker.

6. The control method for low voltage ride through according to claim 1, **characterized in that**, the control circuit in step 4), wherein a crowbar switch control unit is used for further controlling the action of the breaker to be opened firstly and then be closed.
